# EUROPEAN PATENT APPLICATION

(11) **EP 4 852 358 A1**
(43) Date of publication of application: **09.12.2026**
(21) Application number: 25751398.6
(22) Date of filing: 26.01.2025
(51) Int. Cl.: H04L 1/18, H04W 72/0446, H04W 84/06

(54) **COMMUNICATION METHOD AND APPARATUS**

(30) Priority: 05.02.2024 CN 202410166100
(71) Applicant: HUAWEI TECHNOLOGIES CO., LTD., Shenzhen, Guangdong 518129 (CN)
(72) Inventor: HAN, Chengcheng, Shenzhen, Guangdong 518129 (CN); GUO, Zhiheng, Shenzhen, Guangdong 518129 (CN); XIE, Xinqian, Shenzhen, Guangdong 518129 (CN)
(74) Representative: Huawei European IPR
(86) International application number: PCT/CN2025/075186
(87) International publication number: WO 2025/167797

(57) **Abstract**

A communication method and apparatus are provided, to improve accuracy of uplink data transmission based on OCC modulation. The method includes: a terminal device determines a TBS, where the TBS is related to a length of a first sequence; determines a transport block based on the TBS; and then performs transmission of uplink data, where the uplink data is determined based on the transport block, and the uplink data is obtained through modulation based on the first sequence. In this way, a TBS that meets a scenario of PUSCH transmission that is based on modulation using the first sequence (for example, an OCC sequence) can be obtained, to improve accuracy of uplink data transmission that is based on modulation using the first sequence, increase data receive power, and improve coverage.

## Description

### CROSS-REFERENCE TO RELATED APPLICATIONS

This application claims priority to Chinese Patent Application No. 202410166100.5, filed with the China National Intellectual Property Administration on February 5, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Physical uplink shared channel (physical uplink shared channel, PUSCH) transmission based on orthogonal cover code (orthogonal cover code, OCC) modulation refers to transmitting, by a terminal device, same data modulated by an OCC sequence over a plurality of slots (slot), a plurality of orthogonal frequency division multiplexing (orthogonal frequency division multiplexing, OFDM) symbols, or a plurality of resource elements (resource element, RE) in a same slot. The PUSCH transmission based on OCC modulation can increase receive power for same sent data, improve bit error performance of decoding, reduce retransmissions, and reduce a delay, under a prerequisite that spectral efficiency or user capacity is kept unchanged. In addition, when the terminal device at a cell edge has poor channel quality and limited transmit power, the PUSCH transmission based on OCC modulation can increase edge coverage.

Generally, before performing data transmission, the terminal device needs to calculate a transport block size (transfer block size, TBS), to accurately perform data transmission. However, currently, a TBS during the PUSCH transmission based on OCC modulation cannot be accurately calculated. Consequently, the PUSCH transmission based on OCC modulation may be inaccurate.

### SUMMARY

Embodiments of this application provide a communication method and apparatus, to improve accuracy of uplink data transmission based on OCC modulation.

According to a first aspect, this application provides a communication method. The method may be applied to a terminal device or a processor, a chip, or a functional module in the terminal device. The method may include: determining a TBS, where the TBS is related to a length of a first sequence; determining a transport block based on the TBS; and then performing transmission of uplink data, where the uplink data is determined based on the transport block, and the uplink data is obtained through modulation based on the first sequence.

According to the foregoing method, a TBS that meets a scenario of PUSCH transmission that is based on modulation using the first sequence (for example, an OCC sequence) can be obtained, to improve accuracy of uplink data transmission that is based on modulation using the first sequence, increase data receive power, and improve coverage.

In a possible design, that the TBS is related to the length of the first sequence may include: the TBS is determined based on a quotient of a resource quantity of transmission resources of the uplink data and the length of the first sequence. In this way, the TBS in the PUSCH transmission that is based on modulation using the first sequence can be determined.

In a possible design, the transmission resource of the uplink data corresponds to one of M physical uplink shared channel PUSCH repetitions, and M is an integer greater than or equal to 2; or the transmission resource of the uplink data corresponds to N PUSCH transmissions, and N is an integer greater than or equal to 2.

In a possible design, when a transmission resource of the uplink data corresponds to M PUSCH repetitions, and M is an integer greater than or equal to 2, that the TBS is related to the length of the first sequence may include: the TBS is related to the length of the first sequence and M. In this way, the TBS in the PUSCH transmission that is based on modulation using the first sequence can be determined.

In a possible design, that the TBS is related to the length of the first sequence and M may include: the TBS is determined based on a quotient of a quantity of resources for one PUSCH repetition and the length of the first sequence, and the quantity of resources for one PUSCH repetition is a quotient of a resource quantity of the transmission resources of the uplink data and M. In this way, the TBS in the PUSCH transmission that is based on modulation using the first sequence can be determined.

In a possible design, when a transmission resource of the uplink data corresponds to a PUSCH transmission among N PUSCH transmissions, and N is an integer greater than or equal to 2, that the TBS is related to the length of the first sequence may include: the TBS is related to the length of the first sequence and N. In this way, the TBS in the PUSCH transmission that is based on modulation using the first sequence can be determined.

In a possible design, that the TBS is related to the length of the first sequence and N may include: the TBS is determined based on a resource quantity of transmission resources and a first value, and the first value is a quotient of the length of the first sequence and N. In this way, the TBS in the PUSCH transmission that is based on modulation using the first sequence can be determined.

In a possible design, the uplink data is carried in a discrete Fourier transform-spread orthogonal frequency division multiplexing (discrete Fourier transform-spread orthogonal frequency division multiplexing, DFT-s-OFDM) sequence, and a DFT transform length is related to the length of the first sequence. In this way, the DFT transform length in the PUSCH transmission that is based on modulation using the first sequence can be determined.

In a possible design, that the DFT transform length is related to the length of the first sequence may include: the DFT transform length is the quotient of the resource quantity of transmission resources of the uplink data and the length of the first sequence. In this way, the DFT transform length in the PUSCH transmission that is based on modulation using the first sequence can be determined.

In a possible design, the first sequence may be an OCC sequence or a non-orthogonal sequence.

In a possible design, before the TBS is determined, first indication information may be received from a network device, where the first indication information indicates to perform transmission of the uplink data obtained through modulation based on the first sequence. In this way, it may be determined, based on the first indication information, that a TBS that meets PUSCH transmission that is based on modulation using the first sequence needs to be determined.

According to a second aspect, this application provides a communication method. The method may be applied to a network device or a processor, a chip, or a functional module in the network device. The method may include: determining resource configuration information, and sending the resource configuration information to a terminal device, where the resource configuration information is used to configure a first transmission resource, the first transmission resource is used by the terminal device to perform transmission of uplink data obtained through modulation based on a first sequence, and a resource quantity of first transmission resources is related to a length of the first sequence.

According to the foregoing method, resource configuration in a scenario of PUSCH transmission that is based on modulation using the first sequence is implemented, so that a resource configured by the network device meets a resource requirement of PUSCH transmission that is based on modulation using the first sequence and that is performed by the terminal device.

In a possible design, that the resource quantity of first transmission resources is related to the length of the first sequence may include: the resource quantity of first transmission resources is determined based on a product of a quantity of resources required for the transmission of the uplink data and the length of the first sequence. In this way, the network device may allocate, to the terminal device, a resource that meets a requirement of PUSCH transmission that is based on modulation using the first sequence.

In a possible design, the first transmission resource corresponds to one of M physical uplink shared channel PUSCH repetitions, and M is an integer greater than or equal to 2; or the first transmission resource corresponds to N PUSCH transmissions, and N is an integer greater than or equal to 2.

In a possible design, when the first transmission resource corresponds to M PUSCH repetitions, and M is an integer greater than or equal to 2, that the resource quantity of first transmission resources is related to the length of the first sequence may include: the resource quantity of first transmission resources is related to the length of the first sequence and M. In this way, the network device may allocate, to the terminal device, a resource that meets a requirement of PUSCH transmission that is based on modulation using the first sequence.

In a possible design, that the resource quantity of first transmission resources is related to the length of the first sequence and M may include: the resource quantity of first transmission resources is determined based on a product of a quantity of resources required for the transmission of the uplink data, the length of the first sequence, and M. In this way, the network device may allocate, to the terminal device, a resource that meets a requirement of PUSCH transmission that is based on modulation using the first sequence.

In a possible design, when the resource quantity of first transmission resources corresponds to a PUSCH transmission among N PUSCH transmissions, and N is an integer greater than or equal to 2, that the resource quantity of first transmission resources is related to the length of the first sequence may include: the quantity of the first transmission resources is related to the length of the first sequence and N. In this way, the network device may allocate, to the terminal device, a resource that meets a requirement of PUSCH transmission that is based on modulation using the first sequence.

In a possible design, that the quantity of the first transmission resources is related to the length of the first sequence and N may include: the quantity of the first transmission resources is determined based on a quantity of resources required for the transmission of the uplink data and a first value, and the first value is a quotient of the length of the first sequence and N. In this way, the network device may allocate, to the terminal device, a resource that meets a requirement of PUSCH transmission that is based on modulation using the first sequence.

In a possible design, the first sequence may be an OCC sequence or a non-orthogonal sequence.

In a possible design, first indication information is sent to the terminal device, where the first indication information indicates to perform transmission of the uplink data obtained through modulation based on the first sequence. In this way, the terminal device can clearly determine that an allocated resource meets a requirement of PUSCH transmission that is based on modulation using the first sequence.

According to a third aspect, this application further provides a communication apparatus. The communication apparatus has a function of implementing the method in the first aspect or the possible design examples of the first aspect. The function may be implemented by hardware, or may be implemented by hardware executing corresponding software. The hardware or the software includes one or more modules corresponding to the function.

In a possible design, a structure of the communication apparatus may include a processing unit, and optionally, may further include a transceiver unit. These units may perform functions of the method in the first aspect or the possible design examples of the first aspect. Details are not described herein again.

In a possible design, the structure of the communication apparatus includes a processor, and optionally further includes a memory and/or a transceiver. The transceiver is configured to receive and send data, a message, information, or the like, and is configured to communicate and interact with another device in a system. The processor is configured to support the communication apparatus in performing a corresponding function in the first aspect or the possible design examples of the first aspect. The memory is coupled to the processor, and stores program instructions and data necessary for the communication apparatus.

According to a fourth aspect, this application further provides a communication apparatus. The communication apparatus has a function of implementing the method in the second aspect or the possible design examples of the second aspect. The function may be implemented by hardware, or may be implemented by hardware executing corresponding software. The hardware or the software includes one or more modules corresponding to the function.

In a possible design, a structure of the communication apparatus may include a processing unit, and optionally, may further include a transceiver unit. These units may perform functions of the method in the second aspect or the possible design examples of the second aspect. Details are not described herein again.

In a possible design, the structure of the communication apparatus includes a processor, and optionally further includes a memory and/or a transceiver. The transceiver is configured to receive and send data, a message, information, or the like, and is configured to communicate and interact with another device in a system. The processor is configured to support the communication apparatus in performing a corresponding function in the second aspect or the possible design examples of the second aspect. The memory is coupled to the processor, and stores program instructions and data necessary for the communication apparatus.

According to a fifth aspect, an embodiment of this application provides a communication system. The communication system may include a terminal device and/or a network device. The terminal device is configured to implement the method in the first aspect or the possible design examples of the first aspect. The network device is configured to implement the method in the second aspect or the possible design examples of the second aspect.

According to a sixth aspect, an embodiment of this application provides a computer-readable storage medium. The computer-readable storage medium stores program instructions, and when the program instructions are run on a computer, the computer is caused to perform the method in the first aspect and any possible design of the first aspect, or the method in the second aspect and any possible design of the second aspect in embodiments of this application. For example, the computer-readable storage medium may be any usable medium that can be accessed by the computer. By way of example and not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can be configured to carry or store desired program code in a form of instructions or a data structure and that can be accessed by the computer.

According to a seventh aspect, an embodiment of this application provides a computer program product, including instructions. When the instructions are run on a computer, the method in the first aspect or any possible design of the first aspect, or the method in the second aspect or any possible design of the second aspect is performed.

According to an eighth aspect, this application further provides a chip, including a processor. The processor is coupled to a memory, and is configured to read and execute program instructions stored in the memory, to cause the chip to implement the method in the first aspect or any possible design of the first aspect, or the method in the second aspect or any possible design of the second aspect.

For each of the third aspect to the eighth aspect and technical effects that can be achieved in the aspects, refer to the foregoing descriptions of the technical effects that can be achieved in the first aspect, the possible solutions in the first aspect, the second aspect, or the possible solutions in the second aspect. Details are not described herein again.

### BRIEF DESCRIPTION OF DRAWINGS

FIG. 1 is a diagram of an architecture of a communication system according to this application;
FIG. 2 is a diagram of PUSCH sending of two terminal devices based on length-2 OCC modulation (code division multiplexing) according to this application;
FIG. 3 is a flowchart of a communication method according to this application;
FIG. 4 is a diagram of comparison between quantities of resources used for calculating TBSs according to this application;
FIG. 5 is a diagram of comparison between quantities of resources used for calculating TBSs according to this application;
FIG. 6 is a diagram of a DFT transform operation required for PUSCH transmission that is based on length-2 OCC modulation according to this application;
FIG. 7 is a flowchart of a communication method according to this application;
FIG. 8 is a diagram of a structure of a communication apparatus according to this application; and
FIG. 9 is a diagram of a structure of a communication apparatus according to this application.

### DESCRIPTION OF EMBODIMENTS

Embodiments of this application provide a communication method and apparatus, to improve accuracy of uplink data transmission based on OCC modulation. The method and the apparatus in this application are based on a same technical concept. Because problem-resolving principles of the method and the apparatus are similar, mutual reference may be made to implementation of the apparatus and the method, and repeated parts are not described.

In the descriptions of this application, words such as "first" and "second" are merely used for distinguishing between descriptions, and cannot be understood as an indication or implication of relative importance, or cannot be understood as an indication of implication of an order.

In the descriptions of this application, "at least one (type)" means one or more (types), and "a plurality of (types)" means two or more (types). "At least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural.

In the descriptions of this application, "and/or" describes an association relationship between associated objects, and indicates that three relationships may exist. For example, A and/or B may indicate the following cases: Only A exists, both A and B exist, and only B exists, where A and B may be singular or plural. "/" indicates "or". For example, a/b indicates a or b.

To describe the technical solutions in embodiments of this application more clearly, the following describes a communication method and apparatus provided in embodiments of this application in detail with reference to the accompanying drawings.

The communication method provided in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system (for example, a long-term evolution (long-term evolution, LTE) system), a 5th generation (5th generation, 5G) mobile communication system (for example, a new radio (new radio, NR) system), and a future evolved communication system (for example, a 6th generation (6th generation, 6G) mobile communication system).

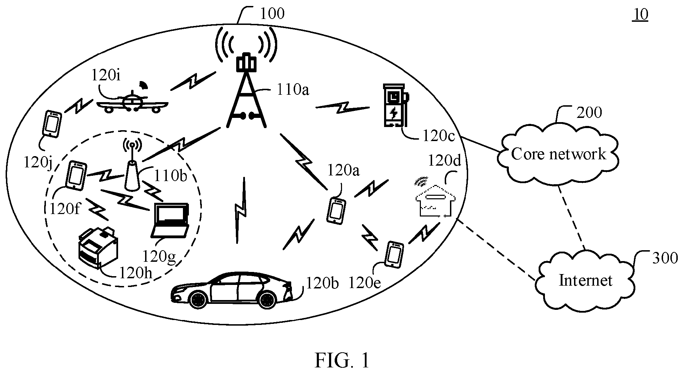

For example, FIG. 1 is a diagram of a possible communication system to which a communication method according to an embodiment of this application is applicable. As shown in FIG. 1, a communication system 10 may include a radio access network (radio access network, RAN) 100 and a core network (core network, CN) 200. Optionally, the communication system 10 may further include an internet 300.

The RAN 100 includes at least one RAN node (for example, 110a and 110b in FIG. 1, collectively referred to as 110) and at least one terminal device (for example, 120a to 120j in FIG. 1, collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

The RAN node 110 sometimes may also be referred to as a RAN entity, an access node, or the like, and forms a part of the communication system, to help the terminal device implement radio access. A plurality of RAN nodes 110 in the communication system 10 may be nodes of a same type, or may be nodes of different types. In some scenarios, roles of the RAN node 110 and the terminal device 120 are relative. For example, a network element 120i in FIG. 1 may be a helicopter or an uncrewed aerial vehicle, and may be configured as a mobile base station. For a terminal 120j that accesses the RAN 100 through the network element 120i, the network element 120i is a base station. However, for a base station 110a, the network element 120i is a terminal device. Both the RAN node 110 and the terminal device 120 are sometimes referred to as communication apparatuses. For example, in FIG. 1, the network elements 110a and 110b may be understood as communication apparatuses having base station functions, and the network elements 120a to 120j may be understood as communication apparatuses having terminal device functions.

The RAN node may also be expressed differently, for example, a network device. In this application, unless otherwise specified, a network device is used for description below.

In a possible scenario, the network device may also be referred to as an access network device. The access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the access network device in this application may alternatively be implemented through a software function running on hardware, or may be implemented through an instantiated virtualization function on a platform (for example, a cloud platform). The access network device in this application may alternatively be a logical node, a logical module, or software that can implement all or the part of the functions of the access network device.

In another possible scenario, a plurality of access network devices collaborate to assist a terminal device in radio access, with different access network devices each implement a part of functions of a base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings of the names. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any of the CU (or the CU-CP or the CU-UP), the DU, and the RU in this application may be implemented by a software module, a hardware module, or a combination of a software module and a hardware module.

The terminal device may also be referred to as user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, smart grid, smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal device is not limited in embodiments of this application.

In the following descriptions of this application, "sending information to a device (for example, a terminal device)" may be understood as that a destination end of the information is the device, and may include directly or indirectly sending the information to the device. "Receiving information from a device (for example, a terminal device)" or "receiving information that is from a device (for example, a terminal device)" may be understood as that a source end of the information is the device, and may include directly or indirectly receiving the information from the device. Necessary processing, for example, a format change, may be performed on the information when the information is sent between the source end and the destination end, but the destination end can understand valid information from the source end. Similar descriptions in this application may be understood similarly. Details are not described herein again.

The following first explains and describes related terms in embodiments of this application. It should be noted that these explanations are intended to make embodiments of this application easier to understand, but should not be considered as a limitation on the protection scope claimed in this application.
(1) Subcarrier: In an orthogonal frequency division multiplexing (orthogonal frequency division multiplexing, OFDM) system, a frequency domain resource is divided into several subresources, and each subresource in frequency domain may be referred to as a subcarrier. The subcarrier may also be understood as a minimum granularity of a frequency domain resource.
(2) Subcarrier spacing: The subcarrier spacing is an interval between center locations or peak locations of two adjacent subcarriers in frequency domain in an OFDM system. For example, a subcarrier spacing in an LTE system is 15 kilohertz (kHz), and a subcarrier spacing in a 5G NR system may be 15 kHz, 30 kHz, 60 kHz, 120 kHz, or the like.
(3) Resource block: At least one subcarrier that is consecutive in frequency domain may be referred to as one resource block. For example, one resource block in an LTE system includes 12 subcarriers, and one resource block in a 5G NR system also includes 12 subcarriers. With evolution of a communication system, one resource block may alternatively include subcarriers of another quantity.
(4) Slot: One slot in a 5G NR system includes 14 OFDM symbols, a slot length corresponding to a 15 kHz subcarrier spacing is 1 millisecond (ms), and a slot length corresponding to a 30 kHz subcarrier spacing is 0.5 ms.
(5) Subframe: A time length of one subframe in a 5G NR system is 1 ms.
(6) OFDM symbol: The OFDM symbol is a minimum time unit in time domain in an OFDM system.
(7) Cyclic prefix (cyclic prefix, CP)-OFDM waveform
   The CP-OFDM is an OFDM waveform, that is, a multi-carrier waveform. In time domain, a plurality of modulation symbols are simultaneously transmitted. In OFDM, a plurality of orthogonal subcarriers are overlapped in a narrowband. Although these subcarriers are orthogonal to each other, a high peak-to-average power ratio (peak-to-average power ratio, PAPR) is generated after these subcarriers are overlapped in time domain.
(8) Discrete Fourier transform-spread orthogonal frequency division multiplexing (discrete Fourier transform-spread orthogonal frequency division multiplexing, DFT-s-OFDM) waveform
   Compared with a physical layer processing procedure of CP-OFDM, a transform precoding (transform precoder) process is added to that of DFT-s-OFDM. To be specific, serial-to-parallel transform is sequentially performed on data to convert the data into parallel data, and then discrete Fourier transform (discrete Fourier transform, DFT) (transform precoding) is sequentially performed. The DFT-s-OFDM is equivalent to a single carrier where although a plurality of symbols are modulated together, the symbols are transmitted one by one. In multi-carrier OFDM, a plurality of carriers are overlapped in time domain. By contrast, in single-carrier SC-OFDM, DFT transform is performed, and the single-carrier SC-OFDM is equivalent to a single subcarrier in time domain. Therefore, a PAPR is low.
(9) DFT-s-OFDM resource constraint
   To facilitate DFT transform by using fast algorithms, when DFT-s-OFDM is used, a protocol requires that a quantity of RBs in a resource allocated by a base station needs to meet the following requirement: a DFT-s-OFDM waveform uses a DFT operation, and an RB length of the DFT-s-OFDM waveform, denoted as M, is constrained to:: M=2^{a}*3^{b}*5^{c}, where a, b, and c are non-negative integers, and in NR, resource indication is performed with an RB as a minimum granularity.
(10) Orthogonal cover code (orthogonal cover code, OCC)
   For the OCC, OCC sequences of different indexes (index) have a same length, and different OCC sequences are orthogonal to each other. For example, +1, +1 and -1, +1 are two OCCs whose lengths are 2. Orthogonality is embodied in that a correlation value between the two OCCs is 0, that is, (+1)*(-1)+(+1)*(+1)=0, where * is a multiplication sign.
(11) Code division multiplexing and orthogonal cover code

The code division multiplexing is a technology in which codewords that are orthogonal to each other are allocated to a plurality of terminal devices with different addresses to implement channel sharing, and may also be referred to as code division multiple access. An orthogonal code (that is, the orthogonal cover code) means that a normalized inner product (inner product) of any two codewords S and T in a codeword set is equal to 0. The following describes in detail an example in which 8-point Walsh transform (Walsh Transform) is used as an orthogonal code to modulate and transmit bit (bit) information. Precautions are as follows: (1) W-point Walsh transform may have a total of W sequences, where W is an exponential multiple of 2. (2) Other orthogonal transform (Orthogonal Transform) than the Walsh transform may alternatively be used as an orthogonal code. (3) A common problem of using the orthogonal transform is that synchronization (Synchronization) is required.

For example, two groups of data of terminal devices are transmitted by using the 8-point Walsh Transform, and are A=[1, 0, 1] and B=[1, 1, 0]. Steps in a modulation process and a demodulation process may be as follows:
1. An orthogonal cover code modulation (modulation) process includes:
   (1) First, 0 in the data is converted into -1, to obtain converted A=[1, -1, 1] and B=[1, 1, -1]. In this way, 0 and 1 can be more easily distinguished from each other during demodulation, thereby reducing a demodulation error rate.
   (2) Modulate A and B by using an orthogonal code, which may specifically include:
      (2-1) A is modulated by using a 1^{st} sequence [1, 1, 1, 1, 1, 1, 1, 1] of the Walsh Transform (that is, a 1^{st} basis (basis) of the Walsh Transform, namely, a 1^{st} row (row) of a Walsh Transform matrix), to obtain a modulation sequence A_m=[1, 1, 1, 1, 1, 1, 1, 1, |-1, -1, -1, -1, - 1, -1, -1, -1,| 1, 1, 1, 1, 1, 1, 1, 1].
      (2-2) B is modulated by using a 2^{nd} sequence [1, 1, 1, 1, -1, -1, -1, -1] of the Walsh Transform (a 2^{nd} row of the matrix), to obtain a modulation sequence B_m=[1, 1, 1, 1, -1, -1, -1, -1, |1, 1, 1, 1, -1, -1, -1, -1,| -1, -1, -1, -1, 1, 1, 1, 1].
   (3) The two terminal devices send the modulation results, and a sequence received by a receive end is H=A_m+B_m= [2, 2, 2, 2, 0, 0, 0, 0, 0, 0, 0, 0, -2, -2, -2, -2, 0, 0, 0, 0, 2, 2, 2, 2], with a total of 24 sequence symbols.
2. An orthogonal cover code demodulation (demodulation) process includes:
   (1) Calculate inner products between the received data and each of channels (channel) separately, which may specifically include:
      (1-1) Calculate an inner product between H and the 1^{st} sequence [1, 1, 1, 1, 1, 1, 1, 1] to obtain the following:
         an inner product of first eight codes: [2, 2, 2, 2, 0, 0, 0, 0] · [1, 1, 1, 1, 1, 1, 1, 1]=8;
         an inner product of middle eight codes: [0, 0, 0, 0, -2, -2, -2, -2] · [1, 1, 1, 1, 1, 1, 1, 1] =-8; and
         an inner product of last eight codes: [0, 0, 0, 0, 2, 2, 2, 2] · [1, 1, 1, 1, 1, 1, 1, 1]=8.
      (1-2) Calculate an inner product between H and the 2^{nd} sequence [1, 1, 1, 1, -1, -1, -1, -1] to obtain the following:
         an inner product of first eight codes: [2, 2, 2, 2, 0, 0, 0, 0] · [1, 1, 1, 1, -1, -1, -1, -1]=8;
         an inner product of middle eight codes: [0, 0, 0, 0, -2, -2, -2, -2] · [1, 1, 1, 1, -1, -1, -1, -1]=8; and
         an inner product of last eight codes: [0, 0, 0, 0, 2, 2, 2, 2] · [1, 1, 1, 1, -1, -1, -1, -1]=-8.
   (2) If an inner product result is 8, the inner product result is demodulated to 1; or if an inner product result is -8, the inner product result is demodulated to -1. This may specifically include:
      (2-1) A signal obtained through demodulation for the 1^{st} sequence is [8, -8, 8]→ [1, - 1, 1].
      (2-2) A signal obtained through demodulation for the 2^{nd} sequence is [8, 8, -8]→[1, 1, -1].
   (3) Finally, restore -1 in the signal obtained through demodulation to 0, which may specifically include:
      (3-1) After demodulation for the 1^{st} sequence is performed, the signal is successfully restored to [1, 0, 1].
      (3-2) After demodulation for the 2^{nd} sequence is performed, the signal is successfully restored to [1, 1, 0].

In uplink transmission, a plurality of users can share a same group of resources (channels) by using an orthogonal code technology.

### (12) PUSCH transmission based on OCC modulation

PUSCH transmission based on OCC modulation refers to transmitting same data modulated by using an OCC sequence over a plurality of slots (slot), a plurality of OFDM symbols, or a plurality of RE resources of a same OFDM symbol. The PUSCH transmission based on OCC modulation can increase receive power for same sent data, improve bit error performance of decoding, reduce retransmissions, and reduce a delay, under a prerequisite that spectral efficiency or user capacity is unchanged. When a user at a cell edge has poor channel quality and limited transmit power, the PUSCH transmission based on OCC modulation can increase edge coverage.

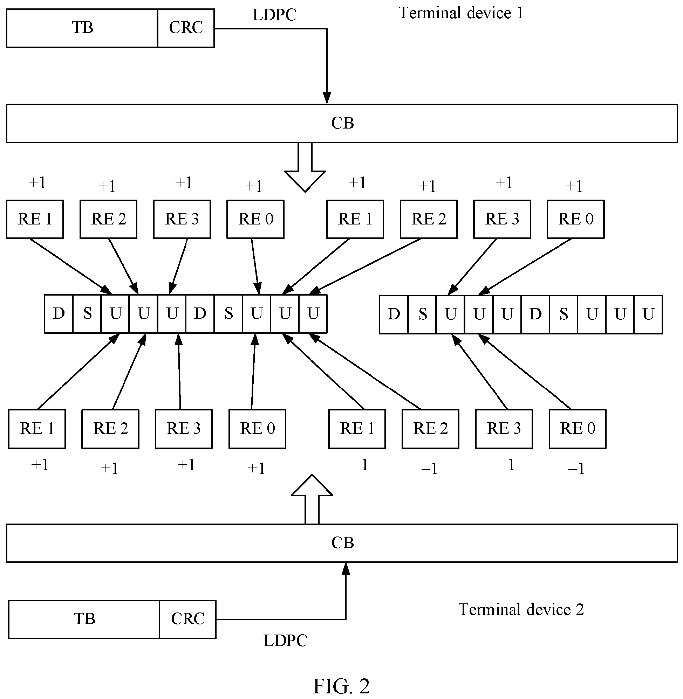

For example, FIG. 2 is a diagram of PUSCH sending of two terminal devices based on length-2 OCC modulation (code division multiplexing). For each terminal device, a cyclic redundancy check (cyclic redundancy check, CRC) is first added to a transport block (transfer block, TB), and then a code block (code block, CB) is formed through low density parity check (low density parity check, LDPC) encoding. Each CB includes four to-be-sent data blocks (or the CB block is mapped to a modulation symbol sequence), and the four to-be-sent data blocks are respectively carried on corresponding resources (for example, RE 0, RE 1, RE 2, and RE 3 in FIG. 2, which represent different resources used for PUSCH transmission herein). The four to-be-sent data blocks are sequentially sent on allocated uplink frequency resources of eight different OFDM symbols, where each data block is modulated by using a length-2 OCC and is sent twice in total (for example, data carried on an RE 1 of a terminal device 1 is modulated by using a sequence (+1, +1), and data carried on an RE 1 of a terminal device 2 is modulated by using a sequence (+1, - 1)). Interference caused by using a same resource by the two terminal devices is eliminated through OCC modulation and demodulation.

### (13) Non-orthogonal sequence

In this application, non-orthogonal sequences may be sequences whose correlation value is less than a first threshold. For example, the first threshold may be 0.05 or another value.

For example, if a non-orthogonal sequence 1 is (a, b), and a non-orthogonal sequence 2 is (c, d), an inner product of the two non-orthogonal sequences is less than the first threshold. Data modulated by using the two non-orthogonal sequences is X and Y (X may be a constellation diagram modulation symbol or a constellation diagram modulation symbol sequence, or may be a frequency coefficient corresponding to a constellation diagram modulation symbol sequence, or may be a frequency coefficient sequence corresponding to a constellation diagram modulation symbol sequence, or may be an OFDM symbol). In this case, modulated data may be obtained as (aX, bX) and (cY, dY).

### (14) Transport block size (transfer block size, TBS) calculation

Data sent by a terminal device from a media access control (media access control, MAC) layer to a physical layer is transmitted in a form of a transport block TB. In other words, the TB is a basic data unit on a transmission channel, of the terminal device, between the MAC layer and the physical layer. One TB corresponds to a data block that includes one MAC protocol data unit (protocol data unit, PDU), and the data block is sent within one transmission time interval (transmission time interval, TTI).

A TBS is a quantity of to-be-encoded bits in one slot or one TTI. The TBS depends on a quantity of resources scheduled by a base station to the terminal device, a modulation scheme, a coding scheme, a quantity of antenna ports, and the like. For example, the TBS may satisfy the following Formula 1: ${N}_{info} = {N}_{RE} ⋅ R ⋅ {Q}_{m} ⋅ ν$ Formula 1

***N*_{info}** is a TBS. ***N_{RE}*** is a total quantity of REs allocated in one slot or one TTI for data transmission (that is, a quantity of resources scheduled by a base station to a terminal device). ***R*** is a coding rate. ***Qₘ*** represents an order of a modulation scheme. The coding rate and the order of the modulation scheme are generally obtained by querying a corresponding modulation and coding scheme (modulation and coding scheme, MCS) table based on an MCS index (index) (index is a row number of the predefined MCS table) indicated by the base station. For example, the modulation scheme may be quadrature phase shift keying (quadrature phase shift keying, QPSK). ***v*** represents a quantity of layers (rank) (which may also be referred to as a quantity of data layers), that is, represents a quantity of layers that a data stream is mapped. Generally, each layer corresponds to one antenna port.

For example, the TBS is calculated based on the following resource quantity ***N _{RE}*** = **min(**156**, *N* '*_{RE}* )**•***n_{PRB}*** (denoted as Formula 2). ***n_{PRB}*** is a quantity of uplink resource RBs allocated by the base station to the terminal device. ${N}_{RE}^{′} = {N}_{SC}^{RB} \cdot {N}_{symb}^{sh} - {N}_{DMRS}^{PRB} - {N}_{oh}^{PRB}$. ***N* '*_{RE}*** is a quantity of subcarriers, used for data transmission, in one physical resource block in frequency domain, that is, a quantity of REs. ${N}_{S C}^{R B}$ is a quantity of REs included in one RB. ${N}_{symb}^{sh}$ is a quantity of OFDM symbols included in a resource that is allocated by the base station and that is used for uplink transmission. ${N}_{D M R S}^{P R B}$ is a quantity of REs included in one RB that are used for a demodulation reference signal (demodulation reference signal, DMRS). ${N}_{oh}^{PRB}$ is a quantity of REs included in one RB that are used for other overheads (for example, overheads configured by a higher layer).

In an uplink transmission process, after obtaining the TBS through calculation, the terminal device performs transmission of a TB whose size is the TBS. A specific process may include the following steps:
S1: The terminal device adds a cyclic redundancy check (cyclic redundancy check, CRC) to the TB whose size is the TBS, where the CRC is a type of code, that is, a CRC bit sequence is added after a last bit (bit) of the TB.
S2: The terminal device selects, based on a length of TB+CRC, a base graph for low density parity check (low density parity check, LDPC) encoding.
S3: The terminal device segments the TB+CRC (optionally, when the length of the TB+CRC is greater than a preset threshold, the TB+CRC needs to be segmented; otherwise, the TB+CRC does not need to be segmented; and after the segmentation, the CRC needs to be added again to each segment).
S4: The terminal device performs LDPC encoding on segmented sequences in parallel.
S5: The terminal device performs rate matching on bit sequences obtained through the LDPC encoding.
S6: The terminal device concatenates bit sequences obtained through the rate matching, to obtain one sequence.
S7: The terminal device performs data multiplexing on the obtained sequence.
S8: The terminal device performs data scrambling.
S9: The terminal device performs modulation on a scrambled bit sequence.
S10: The terminal device performs layer mapping (division into one or more data streams) on a modulation symbol sequence obtained through the modulation.
S11: The terminal device performs DFT transform on data streams of a plurality of layers.
   This step is optional. If the data stream is transmitted by using a DFT-s-OFDM waveform, DFT transform needs to be performed. If the data stream is transmitted by using a CP-OFDM waveform, DFT transform does not need to be performed.
S12: The terminal device performs precoding on the plurality of layers of data streams.
   It should be understood that, if S11 is performed, in S12, precoding is performed on data streams of a plurality of layers obtained through DFT.
S13: The terminal device performs resource mapping on precoded data.
   The resource mapping may include two steps: (1) Data is mapped to a virtual resource block (virtual resource block, VRB) (2) Then, the data is mapped from the VRB to a PRB.
S14: After the resource mapping, the terminal device performs an inverse fast Fourier transformation (inverse fast Fourier transformation, IFFT) to generate an OFDM symbol (to which a CP may be added), and then the terminal device sends the OFDM symbol.

Currently, all REs used for PUSCH transmission in resources allocated by the base station to the terminal device are used to carry different modulation symbols or frequency coefficients corresponding to modulation symbol sequences. However, PUSCH transmission based on OCC modulation may include a plurality of REs of one OFDM symbol or a plurality of REs of a plurality of OFDM symbols that carry OCC modulation symbols of a same modulation symbol or that carry OCC modulation symbols of frequency coefficients corresponding to modulation symbol sequences. It is clear that, currently, a limitation on resource allocation by the base station does not comply with a mechanism of the PUSCH transmission based on OCC modulation. Consequently, a TBS obtained in a current manner of calculating the TBS cannot be accurately used in a scenario of the PUSCH transmission based on OCC modulation. Based on this, an embodiment of this application provides a communication method, to obtain a TBS that meets a scenario of PUSCH transmission based on OCC modulation, so as to improve accuracy of uplink data transmission based on OCC modulation.

In the following embodiments, the communication method provided in embodiments of this application is described in detail by using a network device and a terminal device as an example. It should be understood that an operation performed by the network device may alternatively be implemented by a processor in the network device, a chip, a chip system, a functional module, or the like, and an operation performed by the terminal device may alternatively be implemented by a processor in the terminal device, a chip, a chip system, a functional module, or the like. This is not limited in this application.

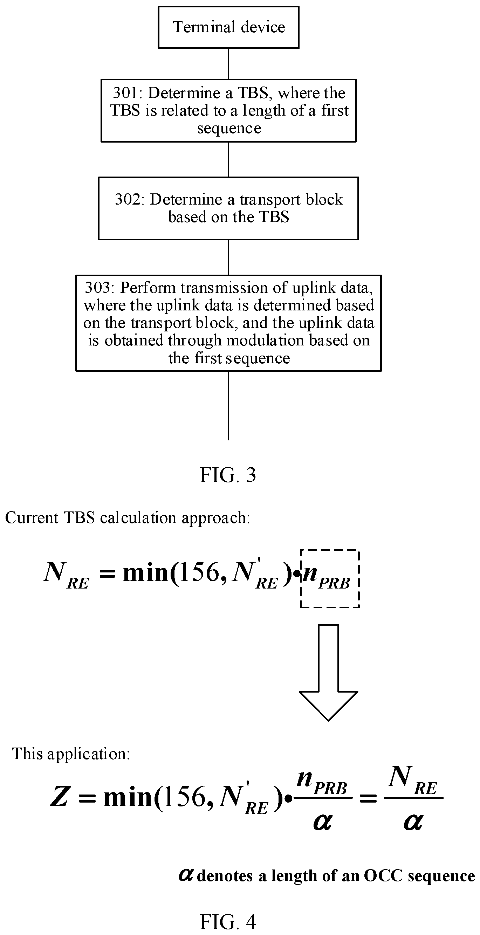

Based on the foregoing descriptions, an embodiment of this application provides a communication method. As shown in FIG. 3, a procedure of the method may include the following steps.

Step 301: The terminal device determines a TBS, where the TBS is related to a length of a first sequence.

In an optional implementation, before the terminal device determines the TBS, the terminal device receives first indication information from the network device, where the first indication information indicates to perform transmission of uplink data obtained through modulation based on the first sequence. It may also be understood as that the first indication information is a trigger condition for determining the TBS by the terminal device.

In another optional implementation, when the terminal device determines that the first sequence is predefined to be used to modulate the uplink data, the terminal device determines the TBS. It may also be understood as that a rule that the first sequence is predefined to be used to modulate the uplink data is a trigger condition for determining the TBS by the terminal device.

For example, the first sequence may be an OCC sequence or a non-orthogonal sequence. Optionally, non-orthogonal sequences may be sequences whose correlation value is less than a first threshold. For example, the first threshold may be 0.05 or another value. In the following example descriptions, an OCC is used as an example for description, but is not intended to limit this application.

In some embodiments, transmission of the uplink data may include the following scenarios: Scenario a1: a PUSCH repetition scenario; Scenario a2, a transport block over multi-slots (TB over multi-slots, TBoMS) scenario; and Scenario a3: a non-repetition scenario, that is, the network device indicates a resource for one PUSCH transmission in one slot or one TTI, for example, a transmission resource of the uplink data corresponds to one PUSCH transmission. In Scenario a1, the network device may indicate a resource for one PUSCH repetition. For example, the transmission resource of the uplink data corresponds to one of M physical uplink shared channel PUSCH repetitions, and M is an integer greater than or equal to 2. Alternatively, the network device may indicate resources for all PUSCH repetitions. For example, the transmission resource of the uplink data corresponds to M PUSCH repetitions. In Scenario a2, the network device may indicate a resource for one PUSCH transmission. For example, the transmission resource of the uplink data corresponds to a PUSCH transmission among N PUSCH transmissions, and N is an integer greater than or equal to 2. Alternatively, the network device may indicate resources for all PUSCH transmissions. For example, the transmission resource of the uplink data corresponds to N PUSCH transmissions.

In a possible case b1, when the transmission resource of the uplink data corresponds to one of the M physical uplink shared channel PUSCH repetitions, or the transmission resource of the uplink data corresponds to the N PUSCH transmissions, or the transmission resource of the uplink data corresponds to one PUSCH transmission in the non-repetition scenario, that the TBS is related to the length of the first sequence may include: the TBS is determined based on a quotient of a resource quantity of transmission resources of the uplink data and the length of the first sequence.

When the transmission resource of the uplink data corresponds to one of M physical uplink shared channel PUSCH repetitions, it may be understood as that the transmission resource of the uplink data corresponds to one slot, which may be referred to as a single-slot resource allocation scenario.

The first sequence being an OCC sequence is used as an example for description. A quantity of REs used for current TBS calculation is equal to a quantity of all RBs allocated by the network device multiplied by a minimum value in Formula 2. In the foregoing case b1, since a length of the OCC sequence of REs carry same data in the PUSCH transmission based on OCC modulation, the TBS required in the PUSCH transmission based on OCC modulation need to be reduced by a corresponding multiple compared with the TBS obtained in the current calculation approach. For example, in this application, the quantity of REs used in the current TBS calculation formula (for example, Formula 2) may be reduced by introducing a scaling factor α equal to the length of an OCC sequence, thereby reducing a TBS calculation value. In other words, a quantity of data-carrying REs used for the TBS in the PUSCH transmission based on OCC modulation is obtained by dividing the resource quantity of transmission resources of the uplink data by the length of the OCC sequence (α). As shown in FIG. 4, compared with the current TBS calculation approach, the calculation approach in this application may be understood in a way that the original ***N_{RE}*** is scaled down by a factor of α. In this application, a quantity of resources used for calculating the TBS is denoted as Z. Therefore, it may be understood as Z= ***N_{RE}*** /α shown in FIG. 4, where "/" represents a division operation. Based on the foregoing descriptions, it may be understood as that scaling of the resource ***N_{RE}*** is implemented by using α, to obtain Z that meets an OCC modulation requirement, and then obtain a TBS that meets the OCC modulation requirement.

In a possible manner, it may also be understood as that scaling of the TBS calculated based on Formula 1 is implemented by using α. To be specific, the final TBS is equal to the TBS calculated according to Formula 1, divided by α, that is, ***N*_{info}=*N_{RE}***·***R***·***Qₘ***·***v***/α.

It should be understood that there may be other manners of understanding scaling for α. This is not limited in this application.

Optionally, that the TBS is determined based on the quotient of the resource quantity of transmission resources of the uplink data and the length of the first sequence may be as follows: The terminal device determines, based on the quotient of the resource quantity of transmission resources of the uplink data and the length of the first sequence, a first resource quantity corresponding to the TBS, and then determines the TBS based on the first resource quantity, a modulation and coding scheme (modulation and coding scheme, MCS), and a quantity of data layers. In this case, the first resource quantity may be understood as Z obtained through scaling of ***N_{RE}*** by using α. Therefore, the first resource quantity may be substituted into Formula 1 with reference to other parameters such as the quantity of data layers, to obtain the final TBS.

Alternatively, optionally, that the TBS is determined based on the quotient of the resource quantity of transmission resources of the uplink data and the length of the first sequence may be as follows: The terminal device calculates a first TBS based on the resource quantity of transmission resources of the uplink data, an MCS, and a quantity of data layers, and then determines the final TBS based on the quotient of the resource quantity of transmission resources of the uplink data and the length of the first sequence, and the first TBS. In this case, the first TBS is a TBS obtained based on a current ***N_{RE}*** and Formula 1, and then scaling is performed on the first TBS by using α, to obtain the final TBS (that is, the first TBS/α).

For example, in a scenario of data transmission not based on modulation using the first sequence, it is assumed that the network device indicates that a resource used for data transmission includes 12 REs (for simplicity, the resource used for data transmission does not include resources for a DMRS and another signal), a coding rate of the MCS is 0.5, a modulation scheme from bits (bit) to a symbol is quadrature phase shift keying (quadrature phase shift keying, QPSK) (mapping from 2 bits to one modulation symbol), and a quantity of layers is 2. In this case, the TBS=12*(0.5)*2*2=24. That is, 24 bits are truncated from data transmitted from an upper layer. The 24 bits are first processed through channel coding with the coding rate of 0.5 to obtain 48 bits (channel coded data). Then, the 48 bits are divided into two streams, and each stream has 24 bits. Then, every two bits are mapped into one constellation diagram modulation symbol. That is, two symbol streams are obtained, and each stream has 12 symbols (24 bits). Then, the two streams occupy 12 REs in a resource sharing manner (Each RE is used by two symbol streams. CP-OFDM is used as an example, and one constellation diagram modulation symbol from each of the two streams is placed on one RE. DFT-s-OFDM is used as an example, and DFT transform is first performed on respective 12 symbols of each of the two streams to obtain respective frequency domain coefficients (12 coefficients), and then the respective 12 frequency domain coefficients of each of the two streams are placed on one RE (the two streams have different occupation manners)). Then, inverse fast Fourier transformation (inverse fast Fourier transformation, IFFT) transformation is performed on the 12 REs to obtain a time domain signal, and the time domain signal is sent.

In this application, in a scenario of data transmission that is based on modulation using the first sequence, it is assumed that the network device indicates that a resource used for data transmission includes 12 REs (for simplicity, the resource used for data transmission does not include resources for a DMRS and another signal), a coding rate of the MCS is 0.5, a modulation scheme from bits to a symbol is QPSK (mapping from 2 bits to one modulation symbol), a quantity of layers is 2, and a length of the first sequence is 2 (that is, the first sequence is length-2). In this case, TBS=12*(0.5)*2*2/2=12 (which may be understood as that α is 2, and the first TBS is 12*(0.5)*2*2). That is, 12 bits are truncated from data transmitted from an upper layer. The 12 bits are first processed through channel coding with the coding rate of 0.5 to obtain 24 bits (channel coded data). Then, the 24 bits are divided into two streams, and each stream has 12 bits. Then, every two bits are mapped into one constellation diagram modulation symbol, that is, two symbol streams are obtained, and each stream has six symbols (12 bits). Then, OCC extension is performed on the two streams (the first sequence is an OCC sequence is used for description) to obtain 12 symbols (24 bits). 12 REs are occupied in a resource sharing manner (Each RE is used by two symbol streams. CP-OFDM is used as an example, and one constellation diagram modulation symbol from each of the two streams is placed on one RE. DFT-s-OFDM is used as an example, and DFT transform is first performed on respective 12 symbols of each of the two streams to obtain respective frequency domain coefficients (12 coefficients), and then the respective 12 frequency domain coefficients of each of the two streams are placed on one RE). Then, IFFT transformation is performed on the 12 REs to obtain a time domain signal, and the time domain signal is sent. It should be understood that, in this example, the OCC is before the symbol and resource mapping. However, there may be another manner. This is not limited in this application.

In another possible case b2, when the transmission resource of the uplink data corresponds to the M PUSCH repetitions, that the TBS is related to the length of the first sequence may include: the TBS is related to the length of the first sequence and M.

Further, that the TBS is related to the length of the first sequence and M may include the following solution: The TBS may be determined based on a quotient of a quantity of resources for one PUSCH repetition and the length of the first sequence, and the quantity of resources for one PUSCH repetition is a quotient of a resource quantity of transmission resources of the uplink data and M.

In the case b2, Quantity Z of resources used for calculating the TBS=(Resource quantity of transmission resources of the uplink data/M)/Length of the first sequence.

It may also be understood as that when the transmission resource of the uplink data corresponds to M PUSCH repetitions, the TBS is related to a quantity of resources for a PUSCH repetition among the M PUSCH repetitions and the length of the first sequence.

In still another possible case b3, when the transmission resource of the uplink data corresponds to one of the N PUSCH transmissions, that the TBS is related to the length of the first sequence may include: the TBS is related to the length of the first sequence and N.

Further, that the TBS is related to the length of the first sequence and N may include the following solution: The TBS is determined based on a resource quantity of transmission resources and a first value, and the first value is a quotient of the length of the first sequence and N.

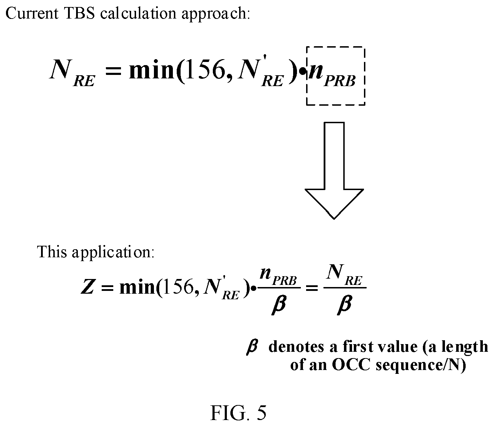

The first sequence being an OCC sequence is still used as an example. In the case b3, since an OCC length of REs carry same data in the PUSCH transmission based on OCC modulation, and same quantities of time-frequency resources in the N PUSCH transmissions need to carry different data, the TBS required in the PUSCH transmission based on OCC modulation need to be reduced by a corresponding multiple compared with the TBS obtained in the current calculation approach. For example, in this application, a quantity of data-carrying REs used for the TBS in the PUSCH transmission based on OCC modulation may be obtained by introducing a scaling factor β equal to a quotient of the OCC length and N (that is, β is equal to the first value). As shown in FIG. 5, compared with the current TBS calculation approach, the calculation approach in this application may be understood in a way that the original ***N_{RE}*** is scaled down by the factor of β. In this application, a quantity of resources used for calculating the TBS is denoted as Z. Therefore, it may be understood as Z= ***N_{RE}*** /β shown in FIG. 5. Based on the foregoing descriptions, it may be understood as that scaling of the resource ***N_{RE}*** is implemented by using β, to obtain Z that meets an OCC modulation requirement, and then obtain a TBS that meets the OCC modulation requirement.

In a possible manner, it may also be understood as that scaling of the TBS calculated based on Formula 1 is implemented by using β. To be specific, Final TBS=TBS calculated based on Formula 1/8, that is, ***N*_{info}=*****N_{RE}**·**R·Qₘ***·***v***/β.

It should be understood that scaling using β may be alternatively understood in a plurality of other manners. This is not limited in this application.

Step 302: The terminal device determines a transport block based on the TBS.

Step 303: The terminal device performs transmission of the uplink data, where the uplink data is determined based on the transport block, and the uplink data is obtained through modulation based on the first sequence.

In some embodiments, after determining the transport block, the terminal device determines the uplink data based on the transport block and the first sequence. For example, the terminal device may first perform modulation on the transport block based on the first sequence, and then perform other processing such as resource mapping to obtain the uplink data. For another example, the terminal device may alternatively first perform other processing such as resource mapping, and then perform modulation based on the first sequence. Certainly, the terminal device may alternatively obtain the uplink data in another manner. This is not limited in this application.

In an optional implementation, the uplink data may be carried in a DFT-s-OFDM sequence, and a DFT transform length is related to the length of the first sequence.

Optionally, that the DFT transform length is related to the length of the first sequence may be understood as follows: The DFT transform length is the quotient of the resource quantity of transmission resources of the uplink data and the length of the first sequence.

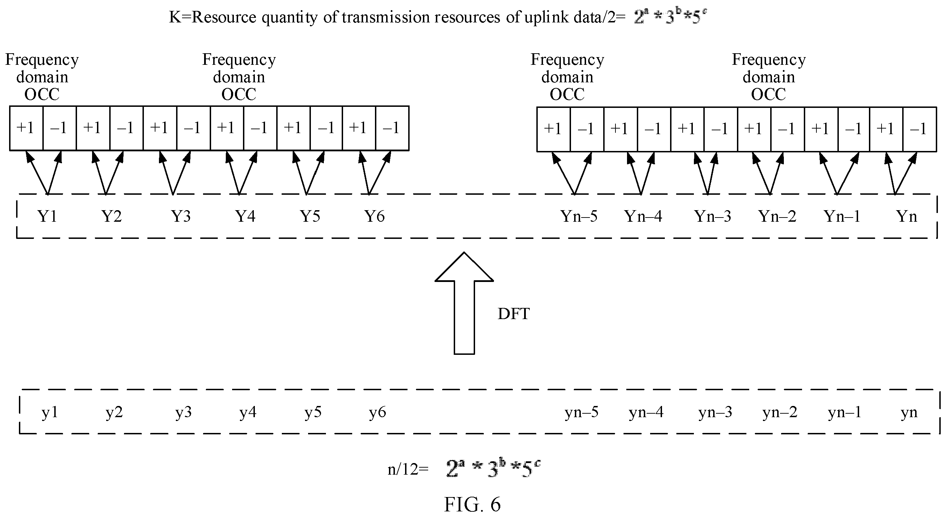

For example, an example in which the first sequence is an OCC sequence is used for description. A terminal device using a DFT-s-OFDM waveform performs DFT transform, and a quantity K of RBs corresponding to the DFT transform length needs to satisfy K=2^{a}*3^{b}*5^{c}, where a, b, and c are non-negative integers, and a value of K is equal to a quantity of RBs that are used for PUSCH transmission and that are in one OFDM symbol in the transmission resource of the uplink data divided by a length of the OCC sequence. For example, as shown in FIG. 6, it is assumed that the length of the OCC sequence is 2. In this case, a quantity of RBs actually used to carry different frequency domain symbols obtained through DFT is half of a resource quantity of transmission resources of the uplink data, that is, K=Resource quantity of transmission resources of the uplink data/2. Therefore, the resource quantity of allocated transmission resources of the uplink data/2 is constrained to meet a requirement of 2^{a}*3^{b}*5^{c}.

In some embodiments, that the terminal device performs transmission of the uplink data may be that the terminal device sends the uplink data to the network device, or may be transmission between protocol layers of the terminal device. This is not limited in this application.

Based on the foregoing communication method, a TBS that meets a scenario of PUSCH transmission that is based on modulation using the first sequence (for example, an OCC sequence) can be obtained, to improve accuracy of uplink data transmission that is based on modulation using the first sequence, increase data receive power, and improve coverage.

Based on the embodiment shown in FIG. 3, there may be the following two cases based on whether time-frequency resources of the network device are sufficient:
Case 1: When the time-frequency resources of the network device are sufficient, the network device may inversely calculate, based on a TBS corresponding to an expected amount of data to be transmitted to the terminal device, a quantity of resources that need to be allocated to the terminal device. For example, the network device may obtain a resource quantity 1 based on the TBS, the coding rate, a modulation order, the quantity of layers, REs required by the DMRS, and a quantity of REs used for overheads, and then round up the resource quantity 1 (a multiple of 12 REs) to obtain a quantity of RBs allocated to the terminal device.
Case 2: When the time-frequency resources of the network device are insufficient, the network device may calculate, based on the remaining time-frequency resources, a maximum amount TBS of to-be-transmitted data that can be allocated to the terminal device this time and an amount of data that still needs to be transmitted by the terminal device subsequently. For example, the terminal device notifies, through reporting, the network device that the terminal device needs to transmit 100 bits. However, the network device can allow the terminal device to transmit only 40 bits this time. In this case, the network device calculates that the terminal device still needs 60 remaining bits, which is beneficial to determining a size of resources of the terminal device that are to be scheduled by the network device next time, and allocation accuracy is high.

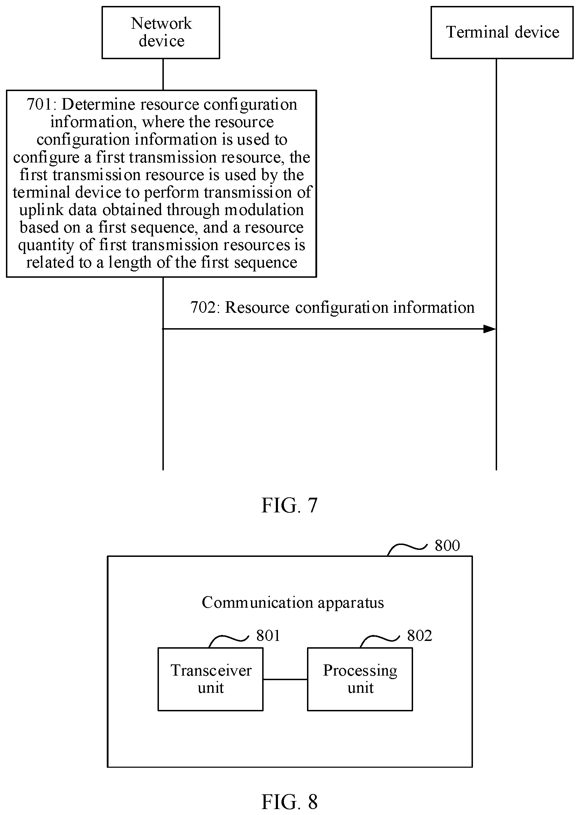

Based on the foregoing descriptions, an embodiment of this application further provides another communication method, to implement resource configuration in a scenario of PUSCH transmission that is based on modulation using a first sequence. As shown in FIG. 7, a procedure of the method may include the following steps.

Step 701: A network device determines resource configuration information, where the resource configuration information is used to configure a first transmission resource, the first transmission resource is used by a terminal device to perform transmission of uplink data obtained through modulation based on a first sequence, and a resource quantity of first transmission resources is related to a length of the first sequence.

For related descriptions of the first sequence, refer to the descriptions in the foregoing embodiment. Details are not described herein again.

In an optional implementation c1, when the first transmission resource corresponds to one of M physical uplink shared channel PUSCH repetitions, or the first transmission resource corresponds to N PUSCH transmissions, that the resource quantity of first transmission resources is related to the length of the first sequence may include: the resource quantity of first transmission resources is determined based on a product of a quantity of resources required for the transmission of the uplink data and the length of the first sequence. In other words, Resource quantity of first transmission resources=Quantity of resources required for the transmission of the uplink data*Length of the first sequence.

In an optional implementation c2, when the first transmission resource corresponds to M PUSCH repetitions, that the resource quantity of first transmission resources is related to the length of the first sequence may include: the resource quantity of first transmission resources is related to the length of the first sequence and M.

Optionally, that the resource quantity of first transmission resources is related to the length of the first sequence and M may include: the resource quantity of first transmission resources is determined based on a product of a quantity of resources required for the transmission of the uplink data, the length of the first sequence, and M.

For example, Resource quantity of first transmission resources=Quantity of resources required for the transmission of the uplink data*Length of the first sequence*M.

In an optional implementation c3, when the resource quantity of first transmission resources corresponds to a PUSCH transmission among N PUSCH transmissions, that the resource quantity of first transmission resources is related to the length of the first sequence may include: the quantity of first transmission resources is related to the length of the first sequence and N.

Optionally, that the quantity of first transmission resources is related to the length of the first sequence and N may include: the resource quantity of first transmission resources is determined based on a quantity of resources required for the transmission of the uplink data and a first value, and the first value is a quotient of the length of the first sequence and N.

For example, Resource quantity of first transmission resources=Quantity of resources required for the transmission of the uplink data*(Length of the first sequence/N).

Step 702: The network device sends the resource configuration information to the terminal device. Correspondingly, the terminal device receives the resource configuration information from the network device.

In some embodiments, the network device may further send first indication information to the terminal device, where the first indication information indicates to perform transmission of the uplink data obtained through modulation based on the first sequence.

Optionally, the resource configuration information and the first indication information may be sent by using a same message, or may be separately sent by using different messages. This is not limited in this application.

According to the foregoing method, resource configuration in a scenario of PUSCH transmission that is based on modulation using the first sequence is implemented, so that a resource configured by the network device meets a resource requirement of PUSCH transmission that is based on modulation using the first sequence and that is performed by the terminal device.

Based on the foregoing embodiments, an embodiment of this application further provides a communication apparatus. As shown in FIG. 8, a communication apparatus 800 may include a processing unit 802. Optionally, the communication apparatus 800 may further include a transceiver unit 801. The transceiver unit 801 is used by the communication apparatus 800 for communication, for example, receiving information (a message or data) or sending information (a message or data), and the processing unit 802 is configured to control and manage an action of the communication apparatus 800. The processing unit 802 may further control steps performed by the transceiver unit 801.

For example, the communication apparatus 800 may be specifically the terminal device in the foregoing embodiments, or a processor, a chip, a chip system, a functional module, or the like in the terminal device. Alternatively, the communication apparatus 800 may be specifically the network device in the foregoing embodiments, or a processor, a chip, a chip system, a functional module, or the like in the network device.

In an embodiment, when the communication apparatus 800 is configured to implement the functions of the terminal device in the embodiment shown in FIG. 3, the processing unit 802 may be configured to: determine a transport block size TBS, where the TBS is related to a length of a first sequence; and determine a transport block based on the TBS. The transceiver unit 801 may be configured to perform transmission of uplink data, where the uplink data is determined based on the transport block, and the uplink data is obtained through modulation based on the first sequence.

In an optional implementation, that the TBS is related to the length of the first sequence includes: the TBS is determined based on a quotient of a resource quantity of transmission resources of the uplink data and the length of the first sequence.

Optionally, the transmission resource of the uplink data corresponds to one of M physical uplink shared channel PUSCH repetitions, and M is an integer greater than or equal to 2; or the transmission resource of the uplink data corresponds to N PUSCH transmissions, and N is an integer greater than or equal to 2.

In another optional implementation, when a transmission resource of the uplink data corresponds to M PUSCH repetitions, and M is an integer greater than or equal to 2, that the TBS is related to the length of the first sequence includes: the TBS is related to the length of the first sequence and M.

For example, that the TBS is related to the length of the first sequence and M includes: the TBS is determined based on a quotient of a quantity of resources for one PUSCH repetition and the length of the first sequence, and the quantity of resources for one PUSCH repetition is a quotient of a resource quantity of the transmission resources of the uplink data and M.

In still another optional implementation, when a transmission resource of the uplink data corresponds to a PUSCH transmission among N PUSCH transmissions, and N is an integer greater than or equal to 2, that the TBS is related to the length of the first sequence includes: the TBS is related to the length of the first sequence and N.

That the TBS is related to the length of the first sequence and N includes: the TBS is determined based on a resource quantity of transmission resources and a first value, and the first value is a quotient of the length of the first sequence and N.

In some embodiments, the uplink data is carried in a discrete Fourier transform-spread orthogonal frequency division multiplexing DFT-s-OFDM sequence, and a DFT transform length is related to the length of the first sequence.

Optionally, that the DFT transform length is related to the length of the first sequence includes: the DFT transform length is the quotient of the resource quantity of transmission resources of the uplink data and the length of the first sequence.

In some examples, the first sequence is an orthogonal cover code OCC sequence or a non-orthogonal sequence.

In an example, the transceiver unit 801 may be further configured to: before the processing unit 802 determines the TBS, receive first indication information from a network device, where the first indication information indicates to perform transmission of the uplink data obtained through modulation based on the first sequence.

In an embodiment, when the communication apparatus 800 is configured to implement the functions of the network device in the embodiment shown in FIG. 7, the processing unit 802 may be configured to determine resource configuration information, where the resource configuration information is used to configure a first transmission resource, the first transmission resource is used by a terminal device to perform transmission of uplink data obtained through modulation based on a first sequence, and a resource quantity of first transmission resources is related to a length of the first sequence. The transceiver unit 801 may be configured to send the resource configuration information to the terminal device.

In an optional implementation, that the resource quantity of first transmission resources is related to the length of the first sequence includes: the resource quantity of first transmission resources is determined based on a product of a quantity of resources required for the transmission of the uplink data and the length of the first sequence.

Optionally, the first transmission resource corresponds to one of M physical uplink shared channel PUSCH repetitions, and M is an integer greater than or equal to 2; or the first transmission resource corresponds to N PUSCH transmissions, and N is an integer greater than or equal to 2.

In another optional implementation, when the first transmission resource corresponds to M PUSCH repetitions, and M is an integer greater than or equal to 2, that the resource quantity of first transmission resources is related to the length of the first sequence includes: the resource quantity of first transmission resources is related to the length of the first sequence and M.

That the resource quantity of first transmission resources is related to the length of the first sequence and M includes: the resource quantity of first transmission resources is determined based on a product of a quantity of resources required for the transmission of the uplink data, the length of the first sequence, and M.

In still another optional implementation, when the resource quantity of first transmission resources corresponds to a PUSCH transmission among N PUSCH transmissions, and N is an integer greater than or equal to 2, that the resource quantity of first transmission resources is related to the length of the first sequence includes: the quantity of the first transmission resources is related to the length of the first sequence and N.

That the quantity of the first transmission resources is related to the length of the first sequence and N includes: the quantity of the first transmission resources is determined based on a quantity of resources required for the transmission of the uplink data and a first value, and the first value is a quotient of the length of the first sequence and N.

In an example, the first sequence is an orthogonal cover code OCC sequence or a non-orthogonal sequence.

In some embodiments, the transceiver unit 801 may be further configured to send first indication information to the terminal device, where the first indication information indicates to perform transmission of the uplink data obtained through modulation based on the first sequence.

It should be noted that, in embodiments of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in a form of a software product. The computer software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

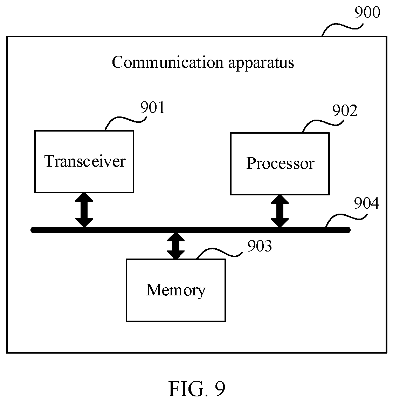

Based on the foregoing embodiments, an embodiment of this application further provides a communication apparatus. As shown in FIG. 9, a communication apparatus 900 may include a processor 902. Optionally, the communication apparatus 900 may further include a transceiver 901. Optionally, the communication apparatus 900 may further include a memory 903. The memory 903 may be disposed inside the communication apparatus 900, or may be disposed outside the communication apparatus 900. The processor 902 may control the transceiver 901 to receive and send information, a message, data, or the like.

Specifically, the processor 902 may be a central processing unit (central processing unit, CPU), a network processor (network processor, NP), or a combination of a CPU and an NP. The processor 902 may further include a hardware chip. The hardware chip may be an application-specific integrated circuit (application-specific integrated circuit, ASIC), a programmable logic device (programmable logic device, PLD), or a combination thereof. The PLD may be a complex programmable device (complex programmable logic device, CPLD), a field-programmable logic gate array (field-programmable gate array, FPGA), a generic array logic (generic array logic, GAL), or any combination thereof.

The transceiver 901, the processor 902, and the memory 903 are connected to each other. Optionally, the transceiver 901, the processor 902, and the memory 903 are connected to each other through a bus 904. The bus 904 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used to represent the bus in FIG. 9, but this does not mean that there is only one bus or only one type of bus.

In an optional implementation, the memory 903 is configured to store a program and the like. Specifically, the program may include program code, and the program code includes computer operation instructions. The memory 903 may include a RAM, and may further include a non-volatile memory (non-volatile memory), for example, one or more disk memories. The processor 902 executes the application program stored in the memory 903 to implement the foregoing functions, to implement functions of the communication apparatus 900.

In an embodiment, when the communication apparatus 900 implements the functions of the terminal device in the foregoing method embodiments, the transceiver 901 may implement receiving and sending operations performed by the terminal device in the foregoing method embodiments; and the processor 902 may implement an operation other than the receiving and sending operations performed by the terminal device in the foregoing method embodiments. For specific related descriptions, refer to the related descriptions in the foregoing method embodiments. Details are not described herein again.

In another embodiment, when the communication apparatus 900 implements the functions of the network device in the foregoing method embodiments, the transceiver 901 may implement receiving and sending operations performed by the terminal device in the foregoing method embodiments; and the processor 902 may implement an operation other than the receiving and sending operations performed by the network device in the foregoing method embodiments. For specific related descriptions, refer to the related descriptions in the foregoing method embodiments. Details are not described herein again.

Based on the foregoing embodiments, an embodiment of this application provides a communication system. The communication system may include the terminal device and/or the network device in the foregoing embodiments.

An embodiment of this application further provides a computer-readable storage medium. The computer-readable storage medium is configured to store a computer program. When the computer program is executed by a computer, the computer may implement the communication method provided in the foregoing method embodiments.

An embodiment of this application further provides a computer program product. The computer program product is configured to store a computer program. When the computer program is executed by a computer, the computer may implement the communication method provided in the foregoing method embodiments.

An embodiment of this application further provides a chip, including a processor. The processor is coupled to a memory, and is configured to invoke a program in the memory, to cause the chip to implement the communication method provided in the foregoing method embodiments.

An embodiment of this application further provides a chip. The chip is coupled to a memory, and the chip is configured to implement the communication method provided in the foregoing method embodiments.

A person skilled in the art should understand that embodiments of this application may be provided as a method, a system, or a computer program product. Therefore, this application may use a form of h entirely hardware embodiments, entirely software embodiments, or embodiments combining software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or a processor of the another programmable data processing device generate an apparatus for implementing a specific function in one or more procedures in the flowcharts and/or in one or more blocks in the block diagrams.

These computer program instructions may be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of the appended claims and equivalents thereof.

## Claims

1. A communication method, comprising:
determining a transport block size TBS, wherein the TBS is related to a length of a first sequence;
determining a transport block based on the TBS; and
performing transmission of uplink data, wherein the uplink data is determined based on the transport block, and the uplink data is obtained through modulation based on the first sequence.

2. The method according to claim 1, wherein that the TBS is related to the length of the first sequence comprises:
the TBS is determined based on a quotient of a resource quantity of transmission resources of the uplink data and the length of the first sequence.

3. The method according to claim 2, wherein the transmission resource of the uplink data corresponds to one of M physical uplink shared channel PUSCH repetitions, and M is an integer greater than or equal to 2; or
the transmission resource of the uplink data corresponds to N PUSCH transmissions, and N is an integer greater than or equal to 2.

4. The method according to claim 1, wherein when a transmission resource of the uplink data corresponds to M PUSCH repetitions, and M is an integer greater than or equal to 2, that the TBS is related to the length of the first sequence comprises:
the TBS is related to the length of the first sequence and M.

5. The method according to claim 4, wherein that the TBS is related to the length of the first sequence and M comprises:
the TBS is determined based on a quotient of a quantity of resources for one PUSCH repetition and the length of the first sequence, and the quantity of resources for one PUSCH repetition is a quotient of a resource quantity of the transmission resources of the uplink data and M.

6. The method according to claim 1, wherein when a transmission resource of the uplink data corresponds to a PUSCH transmission among N PUSCH transmissions, and N is an integer greater than or equal to 2, that the TBS is related to the length of the first sequence comprises:
the TBS is related to the length of the first sequence and N.

7. The method according to claim 6, wherein that the TBS is related to the length of the first sequence and N comprises:
the TBS is determined based on a resource quantity of transmission resources and a first value, and the first value is a quotient of the length of the first sequence and N.

8. The method according to any one of claims 1 to 7, wherein the uplink data is carried in a discrete Fourier transform-spread orthogonal frequency division multiplexing DFT-s-OFDM sequence, and a DFT transform length is related to the length of the first sequence.

9. The method according to claim 8, wherein that the DFT transform length is related to the length of the first sequence comprises:
the DFT transform length is the quotient of the resource quantity of transmission resources of the uplink data and the length of the first sequence.

10. The method according to any one of claims 1 to 9, wherein the first sequence is an orthogonal cover code OCC sequence or a non-orthogonal sequence.

11. The method according to any one of claims 1 to 10, wherein before determining the TBS, the method further comprises:
receiving first indication information from a network device, wherein the first indication information indicates to perform transmission of the uplink data obtained through modulation based on the first sequence.

12. A communication method, comprising:
determining resource configuration information, wherein the resource configuration information is used to configure a first transmission resource, the first transmission resource is used by a terminal device to perform transmission of uplink data obtained through modulation based on a first sequence, and a resource quantity of first transmission resources is related to a length of the first sequence; and
sending the resource configuration information to the terminal device.

13. The method according to claim 12, wherein that the resource quantity of the first transmission resources is related to the length of the first sequence comprises:
the resource quantity of the first transmission resources is determined based on a product of a quantity of resources required for the transmission of the uplink data and the length of the first sequence.

14. The method according to claim 13, wherein the first transmission resource corresponds to one of M physical uplink shared channel PUSCH repetitions, and M is an integer greater than or equal to 2; or
the first transmission resource corresponds to N PUSCH transmissions, and N is an integer greater than or equal to 2.

15. The method according to claim 12, wherein when the first transmission resource corresponds to M PUSCH repetitions, and M is an integer greater than or equal to 2, that the resource quantity of the first transmission resources is related to the length of the first sequence comprises:
the resource quantity of the first transmission resources is related to the length of the first sequence and M.

16. The method according to claim 15, wherein that the resource quantity of the first transmission resources is related to the length of the first sequence and M comprises:
the resource quantity of the first transmission resources is determined based on a product of a quantity of resources required for the transmission of the uplink data, the length of the first sequence, and M.

17. The method according to claim 12, wherein when the resource quantity of the first transmission resources corresponds to a PUSCH transmission among N PUSCH transmissions, and N is an integer greater than or equal to 2, that the resource quantity of the first transmission resources is related to the length of the first sequence comprises:
the quantity of the first transmission resources is related to the length of the first sequence and N.

18. The method according to claim 17, wherein that the quantity of the first transmission resources is related to the length of the first sequence and N comprises:
the quantity of the first transmission resources is determined based on a quantity of resources required for the transmission of the uplink data and a first value, and the first value is a quotient of the length of the first sequence and N.

19. The method according to any one of claims 12 to 18, wherein the first sequence is an orthogonal cover code OCC sequence or a non-orthogonal sequence.

20. The method according to any one of claims 12 to 19, wherein the method further comprises:
sending first indication information to the terminal device, wherein the first indication information indicates to perform transmission of the uplink data obtained through modulation based on the first sequence.

21. A communication apparatus, comprising a module or a unit configured to perform the method according to any one of claims 1 to 11.

22. A communication apparatus, comprising a module or a unit configured to perform the method according to any one of claims 12 to 20.

23. A communication apparatus, comprising a processor, wherein the processor is coupled to a memory; and
the processor is configured to invoke computer instructions in the memory, to cause the communication apparatus to perform the method according to any one of claims 1 to 11.

24. A communication apparatus, comprising a processor, wherein the processor is coupled to a memory; and
the processor is configured to invoke computer instructions in the memory, to cause the communication apparatus to perform the method according to any one of claims 12 to 20.

25. A computer-readable storage medium, wherein the computer-readable storage medium stores computer-executable instructions, and when the computer-executable instructions are invoked by the computer, the method according to any one of claims 1 to 11 is performed, or the method according to any one of claims 12 to 20 is performed.

26. A computer program product, comprising instructions, wherein when the instructions are run on a computer, the method according to any one of claims 1 to 11 is performed, or the method according to any one of claims 12 to 20 is performed.

27. A chip, wherein the chip is coupled to a memory, and is configured to: read and execute program instructions stored in the memory, to implement the method according to any one of claims 1 to 11, or implement the method according to any one of claims 12 to 20.
